# EUROPEAN PATENT SPECIFICATION

(11) **EP 1 657 044 B1**
(45) Date of publication and mention of the grant of the patent: **29.12.2010**
(21) Application number: 05008601.6
(22) Date of filing: 20.04.2005
(51) Int. Cl.: B29C 44/12, B29C 44/04, B29C 44/22

(54) **Process for manufacturing an article of latex foam and corresponding article of latex foam**
Verfahren zum Herstellen eines Gegenstandes aus Latexschaum und entsprechender Artikel
Procédé pour fabriquer un article en latex moussé et produit correspondant

(30) Priority: 11.11.2004 IT MI20042159
(43) Date of publication of application: 17.05.2006
(73) Proprietor: SAPSA BEDDING S.R.L., 20100 Milano (MI) (IT)
(72) Inventor: Abrigo, Luciano, 15100 Alessandria (AL) (IT); De Michele, Pasquale, 15067 Novi Liguri (AL) (IT)
(74) Representative: Mazzarella, Vincenzo

(56) References cited:
- EP-A2- 1 361 033
- DE-A1- 19 737 013
- GB-A- 895 387
- US-A- 2 809 173
- US-A- 2 827 666

## Description

The present invention refers to a process for manufacturing an article of latex foam and to the said article and more in particular to an article comprising mattresses, cushions and the like, according to the preamble of claims 1 and 9.

As it is known the manufacturing of the mentioned articles is made by exploiting a closed mould or a mould of indefinite length, mainly a tape or a series of carriers continuously moved along an annular ring.

Said continuous processes are disclosed by patents EP-B-0380 963, US-A-5,229,138, US-A-6,086,802 of the same applicant. A closed mould mainly comprises two parts, a hollow lower part and an upper part, forming the lid, raisable or rotating by means of hinges with respect to the lower part.

The upper and/or the lower part may comprise a plurality of protuberances projecting outwardly from the respective interior surfaces to shape articles provided with recesses.

As well known, a mixture comprising latex and its components is initially prepared according to special means.

The latex is a dispersion of a rubber polymer in a water serum.

Hereinafter through the term "components" all those substances, materials, ingredients and/or charges are intended whose presence is held useful to perform the steps for manufacturing the article of latex foam according to an optimal way.

The raw components, before their adding to the latex, must be transformed in a water dispersion by means of ball mills in such a way to reduce the particles to a size of few microns.

The mould is filled with the mixture comprising the latex and the components already subjected to the foaming.

The main steps of the process after the foaming, comprise the gelling and the vulcanizing.

The gelling may be described as a homogeneous coagulation where the aqueous -serum part is eliminated and only the rubber polymer is left.

Chemically the gelling is the passage from the "sol" to the "gel" phase.

The gelling avoids the collapsing of the latex foam after its laying.

The vulcanizing step is carried out to produce the desired elasticity grade of the finished article, i.e. the characteristics of resilient deformability, density and uniformity of the article which will guarantee the comfort conditions for the user during his resting.

In the vulcanizing step the mould is heated while crossing a tunnel where steam is introduced.

At the end of the vulcanizing step the upper part of the mould is rotated or is raised up with respect to the hollow lower part, so to allow the article extraction.

Coming back to the latex components it is underlined that they take part to the process steps being active parts both as substances acting chemically in the mixture and as substances finely scattered in the foam, as dust or as liquid dispersion.

Generally said "components" comprise the thickenings, the geller agents, the stabilizers, the process accelerators, the vulcanizing agents, the fillers, the anti-oxidant agents. Generally some treatments, as already said, are carried out on said components before their use.

It is necessary indeed that the starting materials of the components, whatever they may be, for example cellulose residual, before being employed as stabilizers or, if necessary, as fillers, are milled and reduced in minute particles directly introduced in the mixture.

Patent GB 697142 discloses a technique representing the state of art related to the process for manufacturing articles of latex foam.

Such a patent describes a process for manufacturing an article of sponge rubber provided with minute cells uniformly scattered by using latex and various components. ,

The process makes use of a container where a particular solution of sodium silicate is added to a mixture of synthetic or natural rubber, i.e. to the latex and to the components.

In the following step, a pressurized gas is injected into the container and the mixture is stirred at high speed, up to the foaming is obtained.

Later on , the foam is laid upon an endless belt.

Finally the vulcanizing step is carried out by supplying heat.

In some cases the increase in volume during the foaming step may be so large, that the cell walls could tend to collapse.

In order to prevent the cited risk of of collapse, said walls of the cell are strengthened by adding a stabilizing component, which may be a solution of alpha cellulose according to an example of description.

As it may be understood the presence of the stabilizing components is needed to give advantages to the manufacturing process.

Further components of stabilization are employed in the manufacturing process such as thickening and stabilizing agents of the latex foam, for example those made up by methyl cellulose and carboxymethyl cellulose, the latter more known through the name CMC. All these components are put in the mixture as aqueous solutions.

The CMC is a thickener having the task of improving the foam stability.

Such a thickener is chemically active in the mixture through a weak chemical physical interaction.

Initially the foam is unstable.

The foam stability is improved as the CMC swells by absorbing water molecules giving raise in its turn to a mechanical structure allowing the foam to hold on and persisting for a long time.

The final effect is a thickening of the foam around the molecules of CMC, swelled by imbibition.

The molecules of CMC surrounded by water are attracted reciprocally thanks to the Van der Waals forces, so originating a kind of grid, actively interacting with the foam both, through variations of the superficial tension of the foam and through increase in its viscosity, so improving its stability and extending its life.

Furthermore it is known from US-A- 2,809,173 a process for the manufacture of foamed latex sponge reinforced with glass fibres, in which it was found that if the glass fibres are slurried in water with a cationic surface-active agent, a uniform dispersion of discrete glass fibres results and this slurry may readily be mixed with the liquid latex before foaming, to give a final sponge rubber product in which the individual glass fibres are uniformly dispersed without nodulation.

The appellant having in mind to improve more and more its own articles has applied to identify materials capable to give advantages to the finished article.

It was found then that it is possible to make use of single fibres, chemically inert, during the process steps, so to improve the final structure of the article, whether it is a mattress or a cushion or a similar article.

Thus in its first aspect the invention relates to a process according to claim 1.

Hereinafter by the expression "single fibres" we mean fibres of reduced length, independent among them, i.e. not twisted reciprocally. Conveniently said fibres maintain substantially in said finished article the same geometrical and physical structure that they had when introduced into the mixture. Said fibres have a length included between 0,1 and 2 mm,
a ratio between the diameter and the length comprised between 1 and 0,01 and are chemically inert with respect to the latex foam and to its components and are biodegradable.

Advantageously said process is characterized by the fact of comprising natural fibres.

Typically said fibres are vegetal.

According to an alternative of actuation said fibres are of animal origin.

Still in another form of actuation the process makes recourse to synthetic fibres for example of polyester or polyethylene terephtalate or artificial fibres for example of viscose.

Preferably the process is characterized by the fact of comprising a quantity of fibres comprised between 1 and 10 every 100 parts in weight of dry latex.

Conveniently said fibres chemically inert with respect to the mixture comprising latex and all its components can replace some of the components, for example talc.

Advantageously the process is characterized by the fact that said mixture is injected on said laying surface continuously moving.

In its second aspect the invention is characterized by the fact of comprising an article of latex foam manufactured according to the mentioned process.

The present invention will be now further described by means of the enclosed figures, made by way of example and without any limiting intention, where:
FIG. 1 shows, along a schematic longitudinal view a mould and the system of feeding of the mold for carrying out the process according to the invention;
FIG.2 shows, along a longitudinal view a continuous plant for carrying out the process according to the invention;
FIG.3 shows along a longitudinal section a continuous layer of latex foam manufactured by the plant of FIG.2.

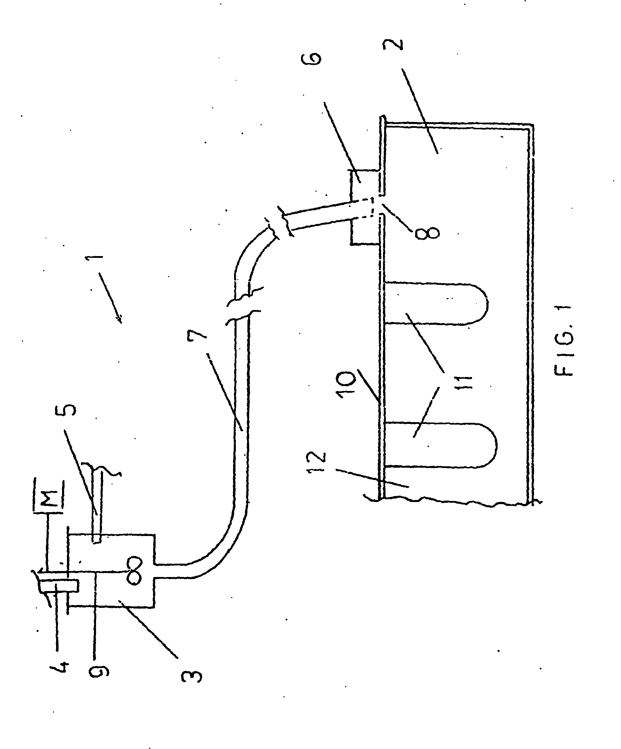

In Fig. 1 a system 1 is shown aimed at laying a foam material in a mould for manufacturing an article of determined size.

The system makes recourse to a tank 3 fed by by two pipes 4, 5, the first of which introduces the material devised for forming the foam article and the second introduces a pressurized gas for determining the foaming step.

The mould comprises a plurality of valves 6 (only one shown in figure) fed by an adduction pipe 7 placed between the tank 3 and the valve 6. The mould makes recourse to said valve 6 schematized for sake of simplicity as a rectangular shape associate to an opening 8 of said mould. The tank 3 is provided by a paddle rotor 9 rotated by a motor M. According to an example of description the mould 2 is used for manufacturing articles of latex foam, such as mattresses or cushions.

The latex may be made of natural or synthetic rubber.

As it may be seen in FIG. 1 the lid 10 of the mould is provided with a plurality of protuberances 11 directed towards the internal cavity 12 in order to produce, when the mould is closed, a plurality of recesses in the final article.

The lid 10 and the cavity 11 are connected reciprocally in such a way that the lid may rotate with respect to the cavity during the opening step.

Suitable means of block (not shown) ensure that the lid and the cavity are reciprocally closed when the mould is used and the pressure in the inner part of the mould may reach up to 3 bar.

At the end of the process the lid 10 is rotated with respect to the cavity, so to allow the opening and the extraction of the article from the mould.

The manufacture of the mattresses and/or cushions using the mould shown in FIG. 1 is performed initially preparing apart a mixture comprising the latex and its components, then filling with this mixture comprising the latex and its components the interior of the tank 3 by means of the pipe 4 and introducing a solution of a geller agent of selected density and quantity, devised to avoid the occurrence of collapsing. Such a geller agent may be for instance fluorosilicate of sodium.

All the various components of the mixture, destined to produce particular conditions for the actuation of a good process, are introduced in the liquid or dispersed form through the pipe 4; in particular such components are oily plastificants, liquid sensitizers, thickenings, anti-oxidant, various possible fillers, as talc, kaolin and others known in the technique.

A pressurized gas is introduced from the pipe 5 and in the same time the rotor 9 is rotated at high speed in such a way as to induce , in a closed space in combination with the presence of the geller agent, the foaming of the mixture in the tank 3.

The foamed mixture is then injected into the inner part of the mould. After the foaming step, the steps of gelling and vulcanization occur in the interior of the mould, destined to confer to the article the final characteristics, in particular the elastic deformability. Finally, the article is extracted from the mould.

All previously described is already known, therefore the chemical interactions between the latex foam and the various components of the foam are omitted.

The innovative part of the present process is the introduction into the mixture, upstream the tank 3, of a wished quantity of single fibres being chemically inert with respect to the latex mixture and to its various components. ,

Said fibres have a length between 0,1 and 2 , for example around 0,3 and 0,7 mm.

The ratio d/l between the diameter "d" of each of said fibres and their length "1" is comprised between 1 and 0,01. If, owing to a particular configuration of the fibre, it is not possible to determine its diameter, the cited ratio is determined by means of the equivalent diameter "de" of the fibre and its length.

The equivalent diameter of the fibre is calculated by means of the following expression: s/n where: S is the cross section of a fibre.

As it can be understood from the above mentioned data, the fibres used in the process of the invention are of reduced length, far lower compared to the values used in field of application different from those of the present invention, for example in the well known technique relating to carpets for cars where the fibres have up to 200 mm length; said fibres of considerable length are arranged in intricate patterns assuming the feature of a knot of reciprocally twisted fibres aimed at realizing a bearing skeleton whose configuration is fixed by laying a foam on them.

According to the known technique, such a knot of fibres is put on a mould where the voids among the fibres are successively filled with said foam substantially stratified.

The invention, unlike what above specified, makes use of fibres, which, owing to their extremely reduced length, cannot be twisted reciprocally to form knots and the like, whose building would hinder the following process steps.

Preferably the process according to the invention makes use of natural fibres, which being inert with respect to the latex foam and being introduced as substances developed along the direction of their length, maintain substantially the starting geometry for the whole time of the process remaining then embedded in the finished article. Therefore said fibres confer to the finished article their own physic characteristics, i.e. they favour a uniform rigidity in the finished article, together with a lightness due to the filiform like shape of the same fibres.

According to a form of actuation it is foreseen to introduce single fibres of cellulose. Said fibres, as already cited, have a physic and a geometric filiform size, both being characteristics which are well different from components of the foam derived by the residual of cellulose usually introduced in the foam by means of an aqueous solution.

In fact, said components, even of cellulose nature but shaped as granules, have tasks only useful to the good success of the process whereas the fibres chemically inert introduced integral into the mixture have characteristics useful to the final product even they do not take part to the steps of the process.

The process according to the invention can be carried out introducing natural fibres of a single or of a different kind: for example cellulosic fibres of different vegetal origin or still animal fibres of a single kind or of kinds different among them, such as wool, silk, bristle, or still a combination in various proportion of vegetal fibres with animal fibres

Advantageously, it is possible to determine a given percentage of said fibres to be introduced during the step of pre-gelling in function of the wished rigidity of the final mattress. In particular, it has been advantageous to make use of the said fibres chemically inert with respect to the latex mixture and to its components in substitution of the material usually present in the foam components, in particular in substitution of the fillers, coming from non biodegradable products, now used in some application.

The mentioned substitution of materials improves the final products, since the presence of said easy biodegradable fibres favours the dispersion of the article at the end of its life. It is found suitable to employ a quantity of fibres comprised between 1 and 10 each 100 parts in weight of dry latex.

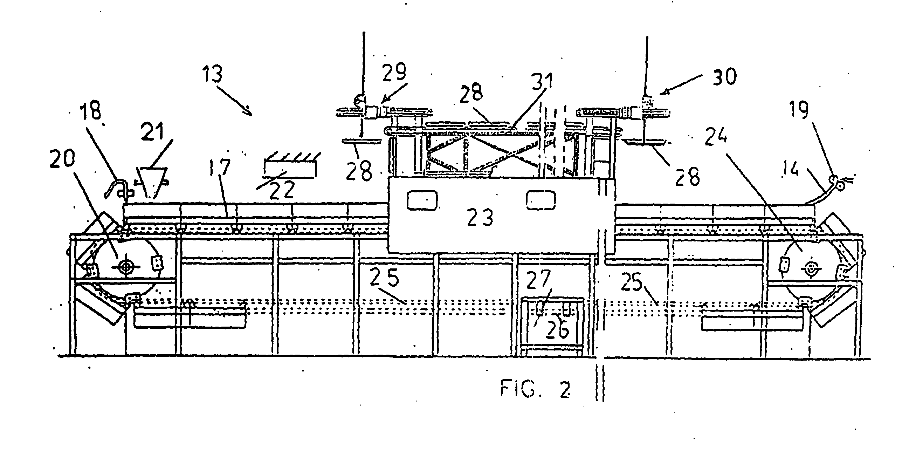

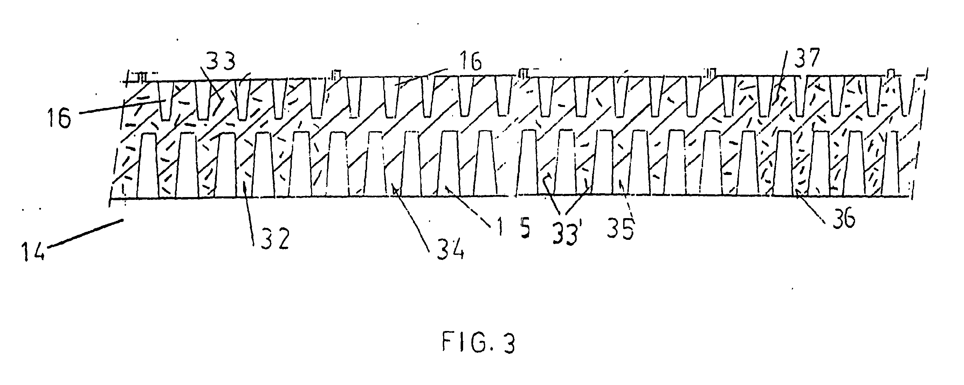

According to a preferred form of realization the process is carried out using the continuous plant of FIG. 2 described in detail in the patent application EP 1 361033 A-2 to which the reader is sent for any further detail needed for a better understanding of the plant. Hereinafter it is shortly reminded that plant 13 is devised to form a continuous layer 14 (FIG.2,3) having lower and upper recesses 15,16; said layer is then cut trausversely to the longitudinal direction to obtain mattresses with recesses.

The plant comprises a plurality of carriers 17, each provided with a surface for the laying of the foam and with a plurality of protuberances (not shown) producing the lower recesses 15.

The carriers are in contact with each other along the upper stretch between the injection device of the foam and the removing rollers 19 of the continuous layer, being moved at a first speed through the thrust received by a driving pulley 20 provided with grooves meshing with small shafts foreseen in the carriers.

The injection device 18 lays on the base surface of the continuously moved carriers the formation material already apart prepared as already said for the process of manufacturing using the closed mould of FIG.1.

Therefore the mixture, before being injected by means of the device 18, comprises also the fibres chemically inert with respect to the latex and to its components.

Such a device is transversally moved with respect to the advancing direction of the carriers so that gradually a layer of determined height is formed.

The plant 13 in the upper stretch may comprise a further device 21 similar to the device 18, for the injection of a mixture to which, previously to the injection, fibres having characteristics different from those introduced through device 18 have been added.

Such a device 21 is moved transversally to the longitudinal direction of the plant, like the injection device 18.

Therefore the process carried out by plant 13 may use either a device 18 or device 21.

The plant 13 still comprises an infrared rays device 22 for favouring the gelling of the foam, and a vulcanizer 23.

As it can be seen from FIG.1 the carriers now empty after the removal of the continuous layer, are taken from the driven pulley 24 provided with grooves meshing with said small shafts of the carriers.

Along the return stretch, the carriers in reduced number compared to those of the upper stretch, stand with their own weight by means of special lateral flanges on conveyors 25 moved at a higher speed with respect to the carriers of the upper stretch; one of the conveyors 26 may be joined to a frame 27 movable transversally for shifting one or more carriers, either for maintenance operations or for change of tools, without interrupting the continuous cycle of manufacturing.

The upper portion of the plant is formed by a plurality of plates 28 each of them provided with protuberances projecting outwardly (not shown) for the moulding of the upper recesses 16, by two operating systems 29, 30, and by one or more conveyors 31 for transporting the plates.

The first operating system 29 lowers each plate in order to sink the corresponding protuberances through the continuous layer before the vulcanizer obtaining in this way the moulding of the recesses 16.

The second operating system raises up the plates from the continuous layer after the vulcanizer.

The conveyors 31 move the plates between the two operating systems.

Advantageously the process according to the invention carried out with the plant 13 allows to confer different benefits to different portions of the continuous layer before it is cut transversally giving rise to the single mattresses when it has been taken from the removing rollers.

Said benefits are obtained making use of a continuous cycle capable to produce mattresses having different characteristics of comfort in extremely reduced times.

As said before, it is possible through the device 18 and/or 21 to introduce mixtures comprising fibres chemically inert of different nature.In fact, as clearly seen in FIG.3, a first portion 32 of the continuous layer with a determined rigidity given by the fibres 33, may be followed by a second portion 34 with less rigidity obtained if a mixture devoid of fibres has been sent to the device 18 and the movement of the device 21 has been stopped and deactivated, and finally by a third portion 35 with a lower rigidity than the first portion 32 if a smaller number of fibres 33' has been loaded on the continuous layer for example by means of the device 21.

The fourth portion 36 of the layer may comprise fibres of wool 37 capable to confer characteristics of thermal insulation to the mattress. Preferably the invention comprises a single core of latex foam, coming from the vulcanizer, destined to form at least a part of an article for the furnishing industry, in particular mattresses, cushions, seats for cars, sofas and the like; said fibres chemically inert with respect to the latex and its components are distributed with a determined ponderal percentage.

Hereinafter with the expression single core it is intended to indicate a product moulded and vulcanized in a single homogeneous piece.

It has been found convenient that said single piece with a volume of 1000 cm³ and a density between 30g/cm³ and 200 g/cm³ comprises from 1% to 10% in weight of said fibres, still preferably distributed uniformly.

The inventions allows to reach the prefixed aims as pointed out by some laboratory proofs.Such proofs concerned three cores of latex foam substantially of the same size comprising the same ingredients with the exception of the mineral charges which were greater in the first core with respect to the second and lacking in the third core.

Moreover, the first core comprised no fibres at all, the second core a determined number of the fibres according to the invention and the third core a higher number of fibres compared to the second core.

The second and the third core obtained a higher stiffness and a smaller weight with respect to the first core.

Substantially, the second and the third core had a stiffness up to about 12% higher than that of the first core.

Such a result shows the advantage for a mattress according to the invention of maintaining good rigidity together with a smaller weight with respect to the known; such a reduction of weight means a reduced total cost of the final product, the other performances of the product being unchanged.

## Claims

1. Process for manufacturing a continuous layer of latex foam to form articles (32,34.35,36) as mattress or cushion with recesses (16) comprising the steps of moving **along an advanced direction** a laying surface (17) with plurality of protuberances (11) for the laying of said layer of latex foam with recesses **produced** by said protuberances, of preparing a mixture comprising rubber latex and fillers in said rubber latex and of foaming said mixture of rubber latex, of injecting said mixture on a said laying surface by a device transversally moved with respect to said **advancing** direction, of gelling, of vulcanising, of transversally cutting said continuous layer to determine said articles with recesses, of extracting said articles with recesses, **characterized by** the adding to said mixture before the step of injecting, a predetermined quantity of fibres (33, 33', 37), chemically inert with respect to said mixture, said fibres consisting of biodegradable fibres having **a length included between 0,1 and 2 mm and a ratio between the diameter and the length comprised between 1 and 0,01.**

2. *Process according to claim 1 **characterized by** single fibres which replace fillers coming from non biodegradable products.*

3. *Process according to claim 1 **characterized by** the fact that said fibres have a length included between 0,3 and 0, 7 mm.*

4. Process according to claim **1** or **2** or **3 characterized by** the fact of comprising natural fibres.

5. Process according to claim **4 characterized by** the fact that said fibres are vegetal.

6. Process according to claim **4 characterized by** the fact that said fibres are animal.

7. Process according to claim 1 or 2 **characterized by** the fact that said fibres are of synthetic nature.

8. Process according to claim 1 **characterized by** the fact of comprising a quantity of fibres comprised between 1 and 10 every 100 parts in weight of latex.

9. Article of latex foam obtainable by the process of claim 1 comprising a mixture of rubber latex **having** a predetermined quantity of fibres (33, 33', 37) said fibres were added to said mixture before the step of injecting, said fibres being chemically inert with respect to said mixture, said fibres consisting of biodegradable fibres **having a length included between 0,1 and 2mm and a ratio between the diameter and the length comprised between 1 and 0,01.**

10. Article according to claim **9 characterized by** the fact of comprising a continuous layer formed by successive portions (32, 34, 35, 36) with a different rigidity determined by the presence of different density distribution of said biodegradable fibres.

11. Article according to claim **9 or 10 characterized by** the fact of comprising a plurality of upper and lower recesses.

## Patentansprüche

1. Verfahren zur Herstellung einer kontinuierlichen Lage aus Latexschaum zur Ausbildung von Artikeln (32, 34, 35, 36) als Matratze oder Kissen mit Aussparungen (16), das die Schritte umfasst
- Bewegen einer Auflegefläche (17) mit einer Vielzahl von Vorsprüngen (11) entlang einer fortgeschrittenen Richtung zum Auflegen der Lage aus Latexschaum mit durch die Vorsprünge erzeugten Aussparungen,
- Zubereiten einer Mischung, die Kautschuklatex und Füllstoffe in dem Kautschuklatex umfasst, und Aufschäumen der Mischung aus Kautschuklatex,
- Einspritzen der Mischung auf die Auflegefläche durch eine Vorrichtung, die bezüglich der fortschreitenden Richtung transversal bewegt wird,
- Gelieren,
- Vulkanisieren,
- transversales Schneiden der kontinuierlichen Lage zur Bestimmung der Artikel mit Aussparungen,
- Extrahieren der Artikel mit Aussparungen,
**gekennzeichnet durch**
- das Zugeben einer vorgegebenen Menge an Fasern (33, 33', 37), die bezüglich der Mischung chemisch inert sind, zu der Mischung vor dem Schritt des Einspritzens, wobei die Fasern aus biologisch abbaubaren Fasern bestehen, die eine Länge zwischen 0,1 und 2 mm und ein Verhältnis zwischen dem Durchmesser und der Länge zwischen 1 und 0,01 aufweisen.

2. Verfahren nach Anspruch 1, **gekennzeichnet durch** einzelne die Füllstoffe ersetzende Fasern, die von biologisch nicht abbaubaren Produkten stammen.

3. Verfahren nach Anspruch 1, **dadurch gekennzeichnet, dass** die Fasern eine Länge zwischen 0,3 und 0,7 mm aufweisen.

4. Verfahren nach Anspruch 1 oder 2 oder 3, **dadurch gekennzeichnet, dass** es natürliche Fasern umfasst.

5. Verfahren nach Anspruch 4, **dadurch gekennzeichnet, dass** die Fasern pflanzlich sind.

6. Verfahren nach Anspruch 4, **dadurch gekennzeichnet, dass** die Fasern tierisch sind.

7. Verfahren nach Anspruch 1 oder 2, **dadurch gekennzeichnet, dass** die Fasern synthetischer Natur sind.

8. Verfahren nach Anspruch 1, **dadurch gekennzeichnet, dass** es eine Menge an Fasern umfasst, die zwischen 1 und 10 pro 100 Gewichtsteilen Latex umfasst sind.

9. Durch das Verfahren nach Anspruch 1 herstellbarer Latexschaumartikel, der eine Mischung aus Kautschuklatex umfasst, die eine vorgegebene Menge an Fasern (33, 33', 37) aufweist, wobei die Fasern der Mischung vor dem Schritt des Einspritzens zugegeben worden sind, die Fasern bezüglich der Mischung chemisch inert sind und die Fasern aus biologisch abbaubaren Fasern bestehen, die eine Länge zwischen 0,1 und 2 mm und ein Verhältnis zwischen dem Durchmesser und der Länge zwischen 1 und 0,01 aufweisen.

10. Artikel nach Anspruch 9, **dadurch gekennzeichnet, dass** er eine kontinuierliche Lage umfasst, die durch aufeinanderfolgende Abschnitte (32, 34, 35, 36) mit unterschiedlicher Steifigkeit gebildet ist, die durch das Vorhandensein einer unterschiedlichen Dichteverteilung der biologisch abbaubaren Fasern bestimmt wird.

11. Artikel nach Anspruch 9 oder 10, **dadurch gekennzeichnet, dass** er eine Vielzahl von oberen und unteren Aussparungen umfasst.

## Revendications

1. Processus de fabrication d'une couche continue de mousse de latex pour former des articles (32, 34, 35, 36) comme un matelas ou un coussin avec des évidements (16) comprenant les étapes consistant à déplacer le long d'une direction avancée une surface de pose (17) avec une pluralité de protubérances (11) pour y poser ladite couche de mousse de latex avec des évidements produits par lesdites protubérances, à préparer un mélange composé d'un latex de caoutchouc et de charges dans ledit latex de caoutchouc et à faire mousser ledit mélange de latex de caoutchouc, à injecter ledit mélange sur ladite surface de pose par un dispositif déplacé transversalement par rapport à ladite direction d'avance, de gélifier, à vulcaniser, à couper transversalement ladite couche continue pour déterminer lesdits articles avec des évidements, à extraire lesdits articles avec des évidements, **caractérisé par** le fait d'ajouter au dit mélange, avant l'étape d'injection, une quantité prédéterminée de fibres (33, 33', 37) chimiquement inertes par rapport au dit mélange, lesdites fibres consistant en des fibres biodégradables ayant une longueur incluse entre 0,1 et 2 mm et un rapport entre le diamètre et la longueur compris entre 1 et 0,01.

2. Processus selon la revendication 1 **caractérisé par** des fibres seules qui remplacent des charges venant de produits non biodégradables.

3. Processus selon la revendication 1 **caractérisé par le fait que** lesdites fibres ont une longueur incluse entre 0,3 et 0,7 mm.

4. Processus selon la revendication 1 ou 2 ou 3 **caractérisé par** le fait de comprendre des fibres naturelles.

5. Processus selon la revendication 4 **caractérisé par le fait que** lesdites fibres sont végétales.

6. Processus selon la revendication 4 **caractérisé par le fait que** lesdites fibres sont animales.

7. Processus selon la revendication 1 ou 2 **caractérisé par le fait que** lesdites fibres sont de nature synthétique.

8. Processus selon la revendication 1 **caractérisé par** le fait de comprendre une quantité de fibres comprise entre 1 et 10 toutes les 100 parties en poids de latex.

9. Article de mousse de latex pouvant être obtenu par le processus de la revendication 1 comprenant un mélange de latex de caoutchouc comportant une quantité prédéterminée de fibres (33, 33', 37) lesdites fibres ont été ajoutées au dit mélange avant l'étape d'injection, lesdites fibres étant chimiquement inertes par rapport au dit mélange, lesdites fibres consistant en fibres biodégradables ayant une longueur incluse entre 0,1 et 2 mm et un rapport entre le diamètre et la longueur compris entre 1 et 0,01.

10. Article selon la revendication 9 **caractérisé par** le fait de comprendre une couche continue formée par des parties successives (32, 34, 35, 36) avec une rigidité différente déterminée par la présence de distribution de densité différente desdites fibres biodégradables.

11. Article selon la revendication 9 ou 10 **caractérisé par** le fait de comprendre une pluralité d'évidements supérieurs et inférieurs.
